(19) **Europäisches Patentamt**
**European Patent Office**
**Office européen des brevets**

(11) **EP 3 537 602 B1**

(12) **EUROPEAN PATENT SPECIFICATION**

(45) Date of publication and mention
of the grant of the patent:
**05.08.2020 Bulletin 2020/32**

(51) Int Cl.:
***H02S 50/00*** *(2014.01)*

(21) Application number: **18460014.6**

(22) Date of filing: **05.03.2018**

(54) **A METHOD OF PV PANELS DIAGNOSTIC IN PV PANELS SYSTEM**

VERFAHREN ZUR DIAGNOSE VON PV-PLATTEN IN EINEM PV-PLATTENSYSTEM

PROCÉDÉ DE DIAGNOSTIC DE PANNEAUX PHOTOVOLTAÏQUES DANS UN SYSTÈME DE PANNEAUX PHOTOVOLTAÏQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.09.2019 Bulletin 2019/37**

(73) Proprietor: **ABB Schweiz AG
5400 Baden (CH)**

(72) Inventors:
• **Lipnicki, Piotr
20-861 Lublin (PL)**
• **Miskiewicz, Milosz
30-392 Krakow (PL)**
• **Lewandowski, Daniel
30-392 Krakow (PL)**

(74) Representative: **Kolster Oy Ab
Salmisaarenaukio 1
P.O. Box 204
00181 Helsinki (FI)**

(56) References cited:
**EP-A1- 3 121 610     US-A1- 2016 282 398**

• **ZHENG HONG ET AL: "Fault diagnosis of photovoltaic inverters using hidden Markov model", 2017 36TH CHINESE CONTROL CONFERENCE (CCC), TECHNICAL COMMITTEE ON CONTROL THEORY, CAA, 26 July 2017 (2017-07-26), pages 7290-7295, XP033149889, DOI: 10.23919/CHICC.2017.8028508 [retrieved on 2017-09-07]**

**Description**

The subject of the invention is a method of PV panels diagnostic in PV panels system using a solar inverter for detecting at least one failed panel in the photovoltaic power generators.

**BACKGROUND OF THE INVENTION**

The solar inverter have been used for converting DC current generated in PV panels into AC current for feeding the electrical grid network. The document US2016/282398A is a closely related prior art.

From EP 1403649 patent application there is known the method and the device for fault diagnosis of photovoltaic generators of a PV installation during a feed-in operation. Many different kind of inverters are used in this aim. The inverter comprises an input side for connecting at least one PV generator comprising one or more solar modules; an output side for feeding into the grid, at least one energy storage device, diodes and semiconductor switches for generating the output -side AC voltage; microcontroller at least for controlling the semiconductor switches and measurement for detecting the electrical input and output parameters for controlling the solar inverter. The microcontroller is adapted to generate current- voltage characteristic measured during the operation of the inverter connected to the PV generator. When the characteristic has at least one knee the indication of the failure is detected and the microcontroller can switch off the failed PV module. In the presented method current and voltage of the PV generator must be measured in order to create the current-voltage characteristic.

The measurement the current and voltage is also necessary during the monitoring DC link capacitance in a power inverter which is known from the international application WO2015/165574. In this solution an indicator ESR (Equivalent Series Resistance) is calculated from measured data.

Unexpectedly appeared that using the DC link in the inverter the current measurement is no needed. Only the voltage can be measured and next from the measured signals the inverter is able to detect the failure in a panel system.

Only by monitoring the DC link voltage in the inverter is possible to diagnostic PV panels.

**SUMMARY OF THE INVENTION**

The presented invention provides a method for PV Panel diagnostic system in solar inverter according to claims 1-5.

The main advantage of the solution according to the invention is that it allows for indication which solar panel is either in normal or faulty condition by using only DC link measuring device what is very convenient and practical from a technical point of view.

BRIEF DESCRIPTION OF THE DRAWINGS

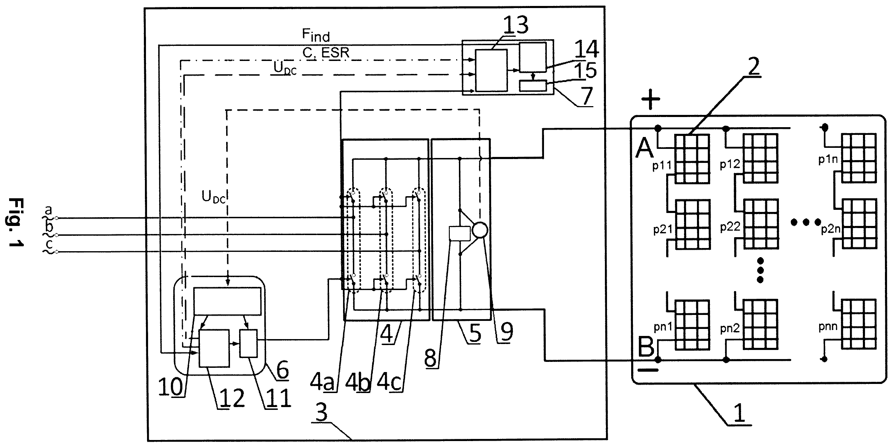

Fig.1 - present schematically a PV panels system with a solar inverter circuit,

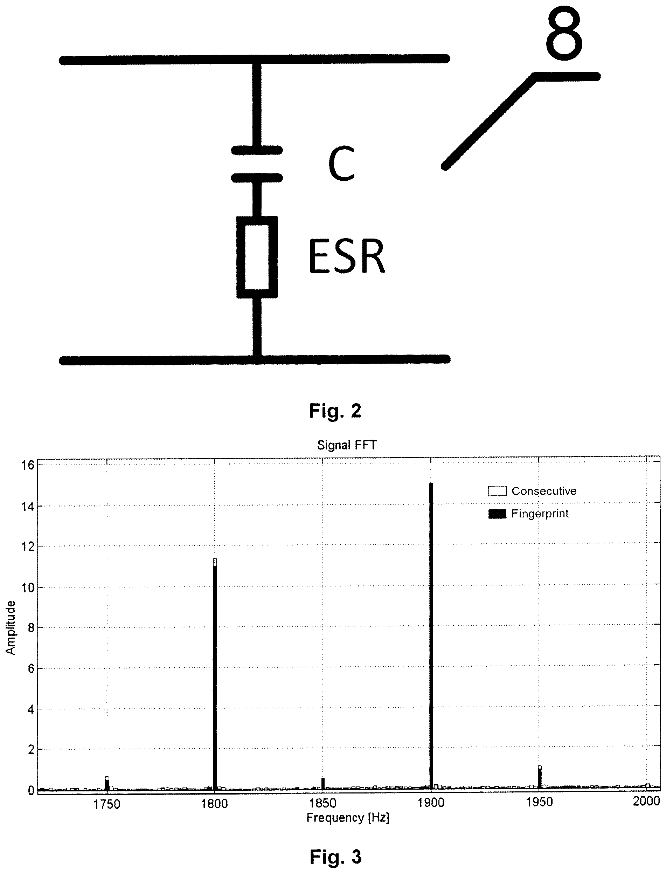

Fig.2 - is an electrical scheme of basic DC link circuit with ESR (Equivalent Series Resistance) embedded in the inverter circuit,

Fig. 3 - presents a fingerprints measurement on a diagram of a FFT of voltage $U_{DC}$ measurement,

Fig.4 - presents a zoom diagram of a FFT of voltage $U_{DC}$ measurement,

Fig. 5 - presents the FFT of voltage $U_{DC}$ fingerprints measurements to be stored,

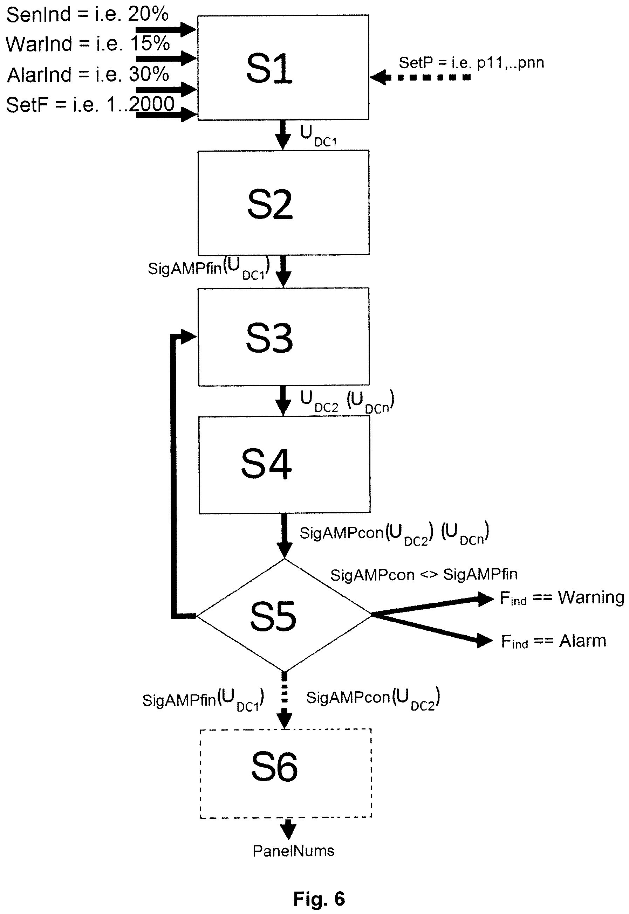

Fig.6 - presents the flowchart of the inventive method.

**Detailed Description of the invention**

A PV panels system 1, which contains PV Panels 2 with single panels p11 .. p1n; p21.. p2n; ....pn1..pnn (where n is a natural number) of the possible known kinds, connected in possible known ways (e.g. series or parallel). The PV panels system 1 is connected through their outputs A and B with a solar inverter circuit 3 having an inverter unit 4 connected parallel with a DC link unit 5. The inverter circuit 3 comprises a solar inverter control unit 6 connected electrically with a PV panels monitoring unit 7. The solar inverter control unit 6 and the PV panels monitoring unit 7 may be combined in single unit what is not presented in the drawing. The inverter unit 4 has at least two solid state switches, forming an inverter switching leg for each phase a, b, c, for converting DC input voltage from the panel system 1 into AC output voltage. The solid state switches of the inverter unit 4 are chosen from any of the possible known kinds - e.g. diodes, transistors, thyristors, etc. The DC link unit 5 comprises at least one DC link circuit 8 and a DC link voltage measuring device 9. DC link circuit 8 comprises capacitor C and an equivalent of series resistance ESR. The inverter control unit 6 is a computer device, having a data acquisition module 10 for receiving and processing input signals from voltage signals $U_{DC}$ of DC link unit 5, measured by the sensor 9 connected to the circuit 8. The inverter control unit 6 is also equipped with an output module 11 for generating switching signals for solid switches 4a, 4b, 4c of the inverter unit 4. The inverter control unit 6 is also equipped with an alarm generating module 12 for gathered the data received from the PV panels monitoring unit 7, e.g. capacitance C of the DC link, the value of ESR (Equivalent Series Resistance) and the voltage values of measured signals $U_{DC}$ and for generating alarm dependent on the value of the fault indicator $F_{ind}$. The PV panels monitoring unit 7 is a computer device, having processing unit 13 for receiving and processing input signals i.e. voltage $U_{DC}$ of DC link unit 5. The PV panels monitoring unit 7 is equipped with a fault indicator module 14 for calculating a fault indicator $F_{ind}$. The fault indicator module 14 is connected with an indication PV panels module 15.

The inventive method is implemented according to the following steps 1-6:

**Step S1 - Measuring voltage signal $U_{DC1}$**

In the step S1 a voltage initial signal $U_{DC1}$ of the DC link circuit 8 is measured by the DC link voltage measuring device 9. In this step a user delivering constant values as a sensitivity indicator SenInd (SenInd = i.e. 20%), a warning indicator WarInd (WarInd = i.e. 15%), an alarm indicator AlarInd (AlarInd = i.e. 30%) and a set number of frequencies SetF for further analysis (SetF = i.e. 1.....2000 Hz). The Optionally a set of numbers SetP of all panels p11,..........pnn is delivered by the user.

**Step S2 - Processing measured signal $U_{DC1}$**

In the step S2 the voltage initial signal $U_{DC1}$ is processed in order to obtain a fingerprints F1....Fn of the measured signal. This is done by performing a spectral analysis of the signal $U_{DC1}$ by using a FFT (Fast Fourier Transform) process and from the characteristic frequencies of $FFT(U_{DC1})$ signal amplitudes $SigAMPfin(U_{DC1})$ of each fingerprint what is calculated in the known way, using the PV panels monitoring unit 7. The fingerprints with signals amplitudes for the set of frequencies SetF given by the user is stored in the fault indication module 14.

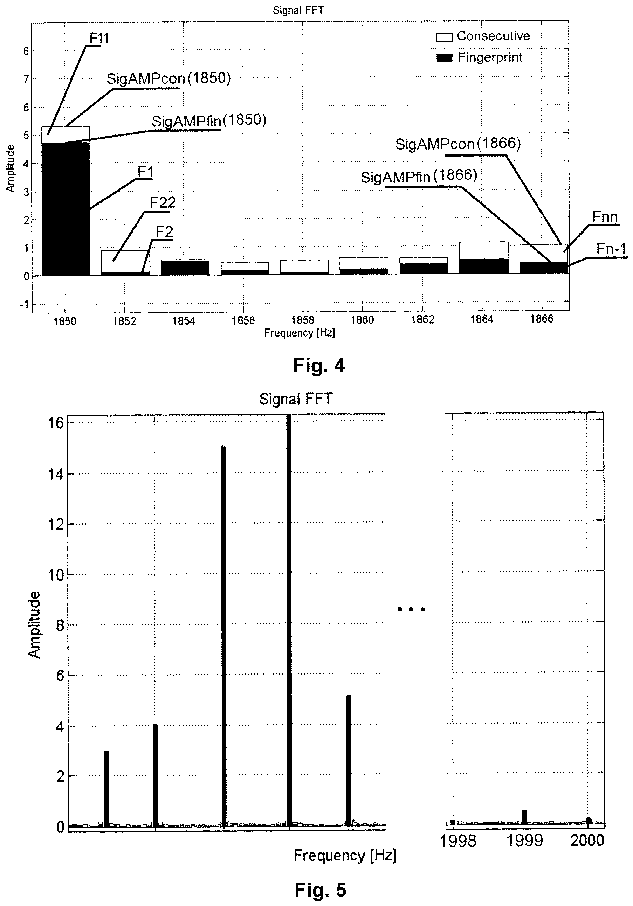

Exemplary embodiment of the finger measurement is presented in fig. 5 and in a table 1.

Table 1.

| FREQUENCY (Hz) | 1 | 2 | 3 | 4 | 5 | ... | 1998 | 1999 | 2000 |
|---|---|---|---|---|---|---|---|---|---|
| FFT Amplitude (p.u.) | 3 | 4 | 15 | 20 | 5 | ... | 0.1 | 0.3 | 0.1 |

**Step S3 - Measuring a consecutive voltage signal $U_{DC2}$**

In the step S3 a consecutive voltage signal $U_{DC2}$ of the DC link circuit 8 is measured by the DC link voltage measuring device 9. For (n) measurements the consecutive voltage signal is indicated as $U_{DCn}$, wherein for the previously measured signal (n-1) the indication is presented as $U_{DCn-1}$.

**Step S4 - Processing measured signal $U_{DC2}$**

In the step S4 the consecutive voltage signal $U_{DC2}$ is processed in order to obtain fingerprints F11.....Fnn of the measured signal. This is done by performing a spectral analysis of the signal $U_{DC2}$ by using a FFT (Fast Fourier Transform) process and from the characteristic frequencies of $FFT(U_{DC2})$ signal amplitudes $SigAMPfin(U_{DC2})$ of each fingerprint what is calculated in the known way, using the PV panels monitoring unit 7. The fingerprints with signals amplitudes for the set of frequencies SetF given by the user is stored in the fault indication module 14.

The PV panels monitoring unit 7 stores the amplitudes values of a chosen SetF set of frequencies amplitudes, given by the user in step 1, i.e. frequency of the scope 1..2000 Hz, concerning the value of a FFT amplitudes of the $U_{DC2}$ of the fingerprints F11.....Fnn including signal consecutive amplitudes $SigAMPcon(U_{DC2})$ of characteristic frequencies of $FFT(U_{DC2})$.

**Step S5 - Settlement the fault indicator F$_{ind}$**

In step 5 a process of a settlement of the fault indicator **F$_{ind}$** is performed by comparing the values of signal consecutive amplitudes SigAMPcon(U$_{DC2}$) with the value of the signal amplitudes SigAMPfin(U$_{DC1}$) of the characteristic frequencies of Fast Fourier Transform FFT(U$_{DC1}$) of the voltage U$_{DC1}$ of DC link unit 5 calculated in the step 2 taking into account the data delivered in the step S1. The percentage difference between the values of signal consecutive amplitudes SigAMPcon(U$_{DC2}$) and the value of the signal amplitudes SigAMPfin(U$_{DC1}$) is the fault indicator Find for each pair of fingerprints F1, F11; F2, F22; .....Fn, Fnn.

In the exemplary embodiment the sensitive indicator SenInd was established as 20% of frequency amplitudes, the warning indicator WarInd is established as 15 % and the alarm indicator AlarInd was established as 30 %. The indicator **F$_{ind}$** is automatically transmitted from the PV panels monitoring unit 7 to the inverter control unit 6.

Depending on the constant data in the step S1 and the value of the fault indicator **F$_{ind}$** settlement in the step S5, the inverter control unit 6 may send the warn signal command or the stop command signal to the inverter unit 4 via the output module 11.

After the decision is made by the system additional analysis of amplitudes values in module is made in step S6. If there is no alarm in step S5 the procedure goes back to step S3.

IF **F$_{ind}$** == Warning THEN Ouput Module 11 = RUN

IF **F$_{ind}$** == Alarm THEN Ouput Module 11 = STOP

If the fault indicator **F$_{ind}$** does not differ form from the constant data in the range of the value given by the user then the steps S3 and S4 are repeated for next consecutive measurement of the DC voltage link U$_{DCn}$.

**Step S6 - Indication of the failed panels**

In this optional step S6 a detailed analysis of amplitudes values of chosen set number of frequencies (SetF = i.e. 1..2000 Hz) amplitudes, given by the user in step S1 of FFT(U$_{DC1}$) of the voltage U$_{DC1}$ of DC link unit 5 from step 2 (SigAMPfin) and amplitudes values of chosen set number of frequencies (SetF = i.e. 1..2000 Hz) amplitudes, given by the user in step S4 of FFT(U$_{DC2}$) of the voltage U$_{DC2}$ of DC link unit 5 from step step 4 (SigAMPcon) is performed under the condition that the set of numbers SetP of all panels p11,.........pnn is delivered by the user in the step S1. Depending on which characteristic frequencies of the specific panel p11 .. p1n... pn1; p21...p2n; pn1......pnn have their amplitudes changed in amplitudes values as with SenInd indicator percentage i.e 20% given by the user in Step 1 (either above or below the SigAMPfin value) for characteristic frequencies a chosen SetF set of frequencies amplitudes, given by the user in step 1, i.e. 1..2000 Hz frequencies of FFT(U$_{DC1}$)& FFT(U$_{DC2}$) of the voltage U$_{DC1}$& U$_{DC2}$ of DC link unit 5, i.e. 15 Hz, 18 Hz, 22Hz, the respective panel is indicated as a panel with a problem (i.e. shading, structure failure etc.). Exemplary embodiment of the panel problem p21 is presented in a table 2.

Table 2

| Frequency (Hz) | i.e. 15, 18, 22 |
|---|---|
| Value change | SenInd = i.e. 20% |
| Panel problem | p21 |

$$\text{SigAMPcon}(15,18,22) = \text{SigAMPfin}(15,18,22) +/- 20\% \times \text{SigAMPfin}(15,18,22).$$

If there are changes in amplitudes values as with SenInd indicator percentage i.e 20% given by the user in Step 1 (either above or below the SigAMPfin value) for characteristic frequencies a chosen SetF set of frequencies amplitudes, given by the user in step 1, i.e. 1..2000 Hz frequencies of FFT(U$_{DC1}$)& FFT(U$_{DC2}$) of the voltage U$_{DC1}$& U$_{DC2}$ of DC link unit 5, i.e. 220 Hz, 305 Hz, 445 Hz, the respective panel is indicated as a panel with a problem (i.e. shading, structure failure etc.). Exemplary embodiment of the panel problem p22 is presented in a table 3.

Table 3

| Frequency (Hz) | i.e. 220, 305, 445 |
|---|---|
| Value change | SenInd = i.e. 20% |
| Panel problem | p22 |

This indicates the problems (i.e. shading, structure failure etc.) with panel p22

$$SigAMPcon(220,305,445) = SigAMPfin(220,305,445) +/- 20\% \times SigAMPfin(220,305,445)$$

The information on which panels (i.e. p21, p22) are having problem, is stored in the indication PV panels module 15 in a table PanelNums for next usage in an upper level diagnostic system or by service personnel, what is not presented in the drawing.

**Claims**

1.    A method of PV panels (2) diagnostic in a PV panels system (1) using a solar inverter (3) having a inverter unit (4) with solid state switches (4a, 4b, 4c), connected parallel with a DC link (5), wherein the solar inverter (3) is equipped with a solar inverter control unit (6) and a PV panels monitoring unit (7), and both units (6) and (7) are computer devices, the method having the step of measuring output voltage signals $U_{DC}$ coming out from the PV panel system (1) and a step of processing measured signals Udc by using the FFT (Fast Fourier Transform) of spectrum analysis, wherein the method comprises the following steps:

    - delivering to the control inverter unit (6) constant values as a sensitivity indicator SenInd, a warning indicator WarInd, and an alarm indicator AlarInd,
    - creating fingerprints (F1, F11; .....Fn-1, Fnn) for each pair of the two consecutive DC link voltage Udc measurement Udc(n-1) and Udcn for each output voltage signals from the panel system (1),
    - comparing the amplitudes of at least one pair of fingerprints (F1, F11;......Fn-1, Fnn) of the measured voltage signals with a value from the set of frequencies chosen by the user and determining a fault indicator $F_{ind}$,
    - automatically triggering a command for the control unit (6) to warn or alarm stop for the inverter unit (4).

2.    A method according to claim 1, **characterized in that** the fingerprints (F1, F11; .....Fn-1, Fnn) are created for the characteristic frequencies of the range 1Hz to 2000Hz.

3.    A method according to claim 1, **characterized in that** the sensitivity indicator SenInd has a value equal 20% of the value of the one pair of the fingerprints, the warning indicator WarInd has a value 15% of the value of the one pair of the fingerprints, and an alarm indicator AlarInd has a value 30% of the value of the one pair of the fingerprints.

4.    A method according to claim 1, **characterized in that** it further comprising the step of indicating failed PV panels by observing the changes in amplitudes of a single pair of the fingerprints (F1, F11; .....Fn-1, Fnn) prepared for each PV panel of a panel system (1), matching the measured value with an individual number of panel, which number is introduced by a user into the PV panel monitoring unit (7) and comparing the changes with a threshold given by the user.

5.    A method according to claim 4, **characterized in that** the changes in amplitudes of a single pair of the fingerprints (F1, F11; .....Fn-1, Fnn) are observed for the characteristic frequencies of the range 1Hz to 2000Hz.

**Patentansprüche**

1.    Verfahren zur PV-Paneel(2)-Diagnose in einem PV-Paneelsystem (1) unter Verwendung eines Solarwandlers (3), der eine Wandlereinheit (4) mit Halbleiterschaltern (4a, 4b, 4c), die mit einem DC-Link (5) verbunden ist, aufweist, wobei der Solarwandler (3) mit einer Solarwandlersteuereinheit (6) und einer PV-Paneelüberwachungseinheit (7) ausgerüstet ist und beide Einheiten (6) und (7) Computervorrichtungen sind, wobei das Verfahren den Schritt des Messens von Ausgangsspannungssignalen $U_{DC}$, die aus dem PV-Paneelsystem (1) kommen, und einen Schritt des Verarbeitens von gemessenen Signalen Udc unter Verwendung der FFT(schnelle Fouriertransformation)-Spektrumanalyse aufweist, wobei das Verfahren die folgenden Schritte umfasst:

    - Übermitteln von konstanten Werten als eine Empfindlichkeitsanzeige SenInd, eine Warnanzeige WarInd und eine Alarmanzeige AlarInd zur Wandlersteuereinheit (6),

- Erstellen von Fingerabdrücken (F1, F11; .....Fn-1, Fnn) für jedes Paar der zwei aufeinanderfolgenden DC-Linkspannungs(Udc)-Messung Udc(n-1) und Udcn für jedes Ausgangsspannungssignale vom Paneelsystem (1),
- Vergleichen der Amplituden von mindestens einem Paar von Fingerabdrücken (F1, F11; .....Fn-1, Fnn) der gemessenen Spannungssignale mit einem Wert aus dem Satz von Frequenzen, die vom Benutzer ausgewählt werden, und Bestimmen einer Fehleranzeige $F_{ind}$,
- automatisches Auslösen eines Befehls für die Steuereinheit (6) zum Warnen oder Alarmstoppen für die Wandlereinheit (4).

2.  Verfahren nach Anspruch 1, **dadurch gekennzeichnet, dass** die Fingerabdrücke (F1, F11; .....Fn-1, Fnn) für die charakteristischen Frequenzen des Bereichs 1 Hz bis 2000 Hz erstellt werden.

3.  Verfahren nach Anspruch 1, **dadurch gekennzeichnet, dass** die Empfindlichkeitsanzeige SenInd einen Wert von 20 % des Wertes des einen Paares von Fingerabdrücken hat, die Warnanzeige WarInd einen Wert von 15 % des Wertes des einen Paares der Fingerabdrücke hat und eine Alarmanzeige AlarInd einen Wert von 30 % des Wertes des einen Paares der Fingerabdrücke hat.

4.  Verfahren nach Anspruch 1, **dadurch gekennzeichnet, dass** es ferner den Schritt des Anzeigens von ausgefallenen PV-Paneelen durch Beobachten der Änderungen der Amplituden eines einzelnen Paares der Fingerabdrücke (F1, F11; .....Fn-1, Fnn), die für jedes PV-Paneel eines Paneelsystems (1) vorbereitet werden, Abgleichen des Messwerts mit einer individuellen Anzahl von Paneel, wobei die Anzahl von einem Benutzer in die PV-Paneelüberwachungseinheit (7) eingegeben wird, und Vergleichen der Änderungen mit einem Schwellwert, der vom Benutzer angegeben wird, umfasst.

5.  Verfahren nach Anspruch 4, **dadurch gekennzeichnet, dass** die Änderungen der Amplituden eines einzelnen Paares der Fingerabdrücke (F1, F11; .....Fn-1, Fnn) für die charakteristischen Frequenzen des Bereichs 1 Hz bis 2000 Hz beobachtet werden.

## Revendications

1.  Procédé de diagnostic de panneaux photovoltaïques (2) dans un système de panneaux photovoltaïques (1) utilisant un onduleur solaire (3) ayant une unité onduleur (4) avec des interrupteurs à semi-conducteur (4a, 4b, 4c), connectés en parallèle avec une liaison en courant continu, CC (5), dans lequel l'onduleur solaire (3) est équipé d'une unité de commande d'onduleur solaire (6) et d'une unité de surveillance de panneaux photovoltaïques (7), et les deux unités (6) et (7) sont des dispositifs informatiques, le procédé ayant l'étape consistant à mesurer de signaux de tension de sortie $U_{DC}$ sortant du système de panneaux photovoltaïques (1) et une étape consistant à traiter des signaux mesurés Udc par l'utilisation de la FFT (Transformée de Fourier Rapide) d'une analyse spectrale, dans lequel le procédé comprend les étapes suivantes :

    - distribuer à l'unité de commande d'onduleur (6) des valeurs constantes telles qu'un indicateur de sensibilité SenInd, un indicateur d'avertissement WarInd et un indicateur d'alarme AlarInd,
    - créer des empreintes digitales (F1, F11 ; ... Fn-1, Fnn) pour chaque paire des deux mesure Udc de tension de liaison CC consécutive, Udc(n-1) et Udcn, pour chaque signaux de tension de sortie du système de panneaux (1),
    - comparer les amplitudes d'au moins une paire d'empreintes digitales (F1, F11 ; ... Fn-1, Fnn) des signaux de tension mesurés avec une valeur de l'ensemble de fréquences choisies par l'utilisateur et déterminer un indicateur de défaillance $F_{ind}$,
    - déclencher automatiquement une instruction pour l'unité de commande (6) pour avertir ou arrêter l'alarme pour l'unité onduleur (4).

2.  Procédé selon la revendication 1, **caractérisé en ce que** les empreintes digitales (F1, F11 ; ... Fn-1, Fnn) sont créées pour les fréquences caractéristiques de la plage de 1 Hz à 2000 Hz.

3.  Procédé selon la revendication 1, **caractérisé en ce que** l'indicateur de sensibilité SenInd possède une valeur égale à 20 % de la valeur de ladite une paire des empreintes digitales, l'indicateur d'avertissement WarInd possède une valeur de 15 % de la valeur de ladite une paire des empreintes digitales et un indicateur d'alarme AlarInd possède une valeur de 30 % de la valeur de ladite une paire des empreintes digitales.

4. Procédé selon la revendication 1, **caractérisé en ce qu'**il comprend en outre l'étape consistant à indiquer des panneaux photovoltaïques défaillants par l'observation des changements dans les amplitudes d'une unique paire des empreintes digitales (F1, F11 ; ... Fn-1, Fnn) préparée pour chaque panneau photovoltaïques d'un système de panneaux (1), mettre en correspondance la valeur mesurée avec un numéro individuel de panneau, lequel numéro est saisi par un utilisateur dans l'unité de surveillance de panneaux photovoltaïques (7) et comparer les changements avec un seuil donné par l'utilisateur.

5. Procédé selon la revendication 4, **caractérisé en ce que** les changements dans les amplitudes d'une unique paire des empreintes digitales (F1, F11 ; ... Fn-1, Fnn) sont observés pour les fréquences caractéristiques de la plage de 1 Hz à 2000 Hz.

**Fig. 1**

**Fig. 2**

**Fig. 3**

Signal FFT

**Fig. 4**

Signal FFT

**Fig. 5**

SenInd = i.e. 20%
WarInd = i.e. 15%
AlarInd = i.e. 30%
SetF = i.e. 1..2000

SetP = i.e. p11,..pnn

S1

$U_{DC1}$

S2

SigAMPfin($U_{DC1}$)

S3

$U_{DC2}$ ($U_{DCn}$)

S4

SigAMPcon($U_{DC2}$) ($U_{DCn}$)

SigAMPcon <> SigAMPfin

$F_{ind}$ == Warning

$F_{ind}$ == Alarm

S5

SigAMPfin($U_{DC1}$)   SigAMPcon($U_{DC2}$)

S6

PanelNums

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016282398 A
- EP 1403649 A

- WO 2015165574 A